# EUROPEAN PATENT APPLICATION

(11) **EP 2 033 807 A1**
(43) Date of publication of application: **11.03.2009**
(21) Application number: 08005653.4
(22) Date of filing: 26.03.2008
(51) Int. Cl.: B44C 1/10, G01J 1/50, G02B 5/20

(54) **Transfer printing structure capable of sensing and indicating intensity of ultraviolet rays**

(30) Priority: 05.09.2007 TW 96214914 U
(71) Applicant: Huang, Chih-Chin, Taipei City 105 (TW)
(72) Inventor: Huang, Chih-Chin, Taipei City 105 (TW)
(74) Representative: Zeitler, Giselher

(57) **Abstract**

A transfer printing structure capable of sensing and indicating intensity of ultraviolet rays. The transfer printing structure includes a substrate having a transfer print face and a transfer print sensitive layer laid on the transfer print face of the substrate. The transfer print sensitive layer is able to sense environmental ultraviolet rays to change its look. When a pressure is exerted onto a backside of the substrate, the transfer print sensitive layer adhesively attaches to a surface of an article or human body. When the article or human body moves outdoors, the look of the transfer print sensitive layer varies with the intensity of the ultraviolet rays to indicate the intensity of the ultraviolet rays.

## Description

### BACKGROUND OF THE INVENTION

The present invention is related to a transfer printing structure capable of sensing and indicating intensity of ultraviolet rays. The transfer printing structure includes a transfer print sensitive layer which can be transfer printed onto a predetermined surface. The transfer print sensitive layer is able to sense intensity of ultraviolet rays and vary its look with the intensity of ultraviolet rays.

It is known that the ozonosphere of the earth has been humanly damaged. Consequently, the surface of the earth is sunned stronger and stronger. The ultraviolet rays in the sunlight not only are harmful to human skin, but also often cause damage to human eyes. Therefore, when working or playing outdoors and exposed to strong sunlight, it is necessary to always pay attention to the intensity of environmental ultraviolet rays so as to take suitable action in protecting the skin and eyes from being damaged. Various devices have been developed for sensing and indicating intensity of environmental ultraviolet rays. For example, Taiwanese Patent No. 365650 discloses a device for indicating intensity of ultraviolet rays. The device includes at least one color-changeable region containing different or the same ultraviolet ray-sensitive color-changeable dye and ultraviolet ray-absorbent in different or the same ratio. Under different intensities of ultraviolet rays, the respective color-changeable regions will successively change their colors. With the ultraviolet ray indexes marked beside the color-changeable regions, the intensity of ultraviolet rays is indicated.

However, in the above device, the color-changeable regions are simply applied to a hard card (substrate ). Therefore, a user needs to always carry the card and expose a face of the card with the color-changeable regions to where the ultraviolet rays are radiated. Therefore, it is not handy to use such device.

### SUMMARY OF THE INVENTION

It is therefore a primary object of the present invention to provide a transfer printing structure capable of sensing and indicating intensity of ultraviolet rays. The transfer printing structure includes a transfer print sensitive layer which can be transfer printed onto a predetermined surface as necessary. The transfer print sensitive layer is able to sense intensity of ultraviolet rays and vary its look with the intensity of ultraviolet rays so as to indicate the intensity of ultraviolet rays.

It is a further object of the present invention to provide the above transfer printing structure in which under different intensities of ultraviolet rays, different the transfer print sensitive layer presents different combinations of looks so as to indicate the intensity of ultraviolet rays.

According to the above objects, the transfer printing structure of the present invention includes a substrate having a transfer print face and a transfer print sensitive layer laid on the transfer print face of the substrate. The transfer print sensitive layer is able to sense environmental ultraviolet rays to change its look. When a pressure is exerted onto a backside of the substrate, the transfer print sensitive layer adhesively attaches to a surface of an article. When the article is exposed to external ultraviolet rays, the transfer print sensitive layer can sense different intensities of ultraviolet rays to vary its look with the intensity of the ultraviolet rays.

In the above transfer printing structure, the color of the transfer print sensitive layer varies with the intensity of the ultraviolet rays.

In the above transfer printing structure, the shade of color of the transfer print sensitive layer varies with the intensity of the ultraviolet rays.

The present invention can be best understood through the following description and accompanying drawings wherein:

### BRIEF DESCRIPTION OF THE DRAWINGS

Fig. 1 is a perspective view of the transfer printing structure of the present invention;
Fig. 2 shows an application of the transfer printing structure of the present invention;
Fig. 3 shows that the look of the transfer printing structure of the present invention varies with the intensity of ultraviolet rays in one state; and
Fig. 4 shows that the look of the transfer printing structure of the present invention varies with the intensity of ultraviolet rays in another state.

### DETAILED DESCRIPTION OF THE PREFERRED EMBODIMENTS

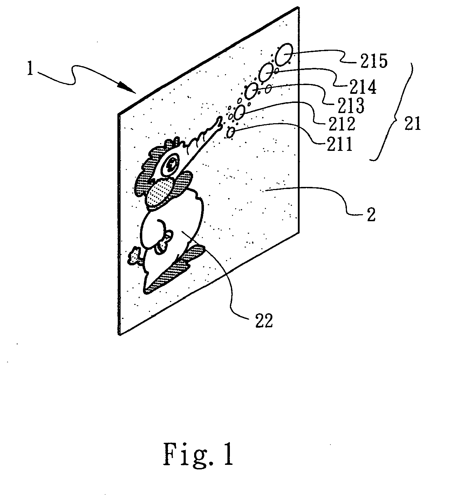

Please refer to Fig. 1. The transfer printing structure of the present invention includes a substrate 1 and a transfer print sensitive layer 2. The substrate 1 has at least one transfer print face. The substrate 1 is able to bear a pressure coming from the backside, whereby the transfer print face of the substrate 1 can exert a forward transfer print pressure onto an article. The transfer print sensitive layer 2 is laid on the transfer print face of the substrate 1. The transfer print sensitive layer 2 is composed of at least one display region 21. A decorative figure 22 can be added to the transfer print face in accordance with the display region 21. The state of the decorative figure 22 is not affected by ultraviolet rays, that is, not varied with the intensity of the ultraviolet rays. The display region 21 includes multiple display units 211, 212, 213, 214, 215 capable of sensing the intensity of external ultraviolet rays to change the look.

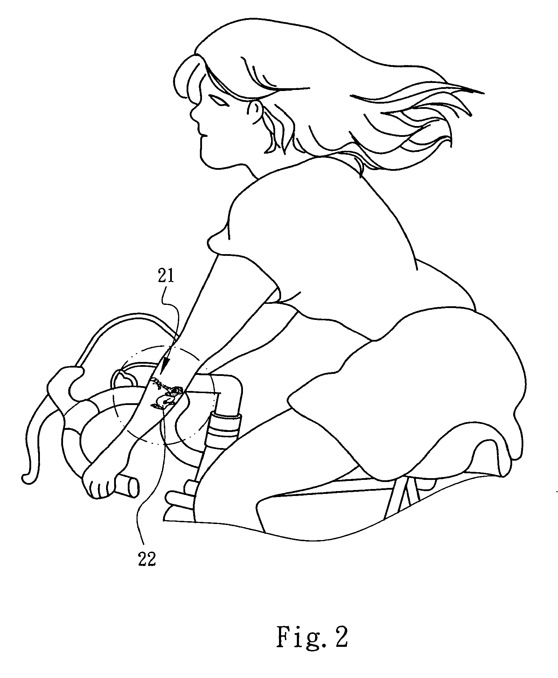

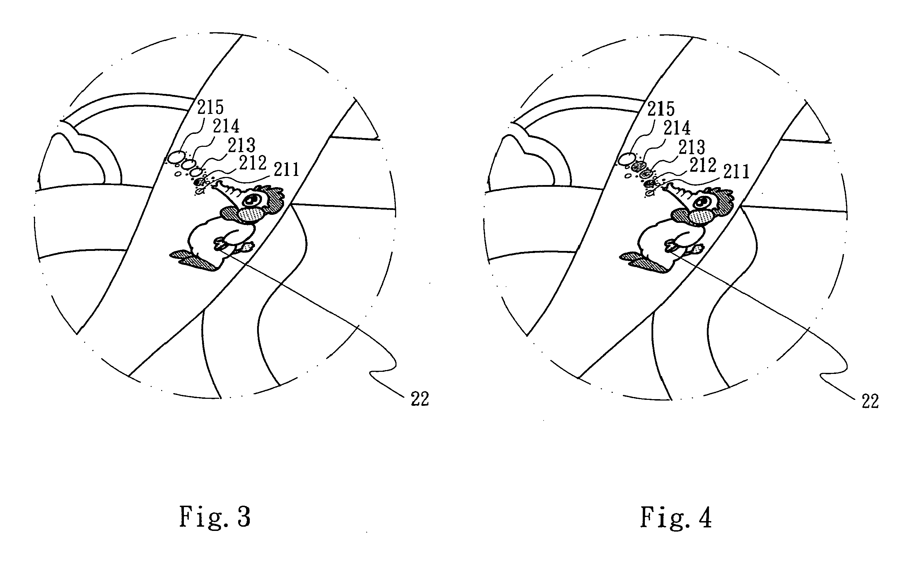

Fig. 2 shows an application of the present invention. Also referring to Figs. 3 and 4, the state of the transfer print sensitive layer 2 varies with the intensity of ultraviolet rays. An adhesive layer can be applied to outer face of the transfer print sensitive layer 2. Alternatively, an adhesive layer can be previously applied to a surface of an article or a human body. When a pressure is exerted onto the backside of the substrate 1, the transfer print sensitive layer 2 adhesively attaches to the surface of the human body or the article. The transfer print sensitive layer 2 can always sense the environmental ultraviolet rays. The display units 211, 212, 213, 214, 215 of the display region 21 have different sensitivities to the ultraviolet rays and will develop under different intensities of ultraviolet rays in many manners. For example, the display units 211, 212, 213, 214, 215 can develop to present different colors for distinguishing between the display units 211, 212, 213, 214 and 215. Alternatively, the display units 211, 212, 213, 214, 215 can present the same color of different shades for distinction. In the case that the substrate 1 is placed in an environment under weaker ultraviolet rays, only the display units 211, 212 are energized to develop as shown in Fig. 3. In the case that the substrate 1 is placed in an environment under stronger ultraviolet rays, the display units 211, 212, 213, 214 are energized to develop as shown in Fig. 4. Accordingly, the number of the developing display units substantially indicates the current intensity of the environmental ultraviolet rays. A user can easily know the current intensity of ultraviolet rays by means of seeing how many display units develop so as to take action in protecting himself/herself.

Alternatively, the display region 21 or the transfer print sensitive layer 2 can be an integrated display unit. The shown shade of color of the display unit indicates the intensity of the ultraviolet rays. In actual use, the display region 21 not only is applicable to a tattoo sticker, but also can be used as a material of fingernail art or the like. In an outdoor environment, the display region 21 varies with the intensity of sunlight (ultraviolet rays) to serve as an ultraviolet ray indicator as well as achieve a decorative effect.

The above embodiments are only used to illustrate the present invention, not intended to limit the scope thereof. Many modifications of the above embodiments can be made without departing from the spirit of the present invention.

## Claims

1. A transfer printing structure capable of sensing and indicating intensity of ultraviolet rays, comprising:
a substrate having a transfer print face; and
a transfer print sensitive layer laid on the transfer print face of the substrate, when a pressure is exerted onto a backside of the substrate, the transfer print sensitive layer is able to adhesively attach to a surface of an article, the transfer print sensitive layer being also able to sense environmental ultraviolet rays to change its look, whereby the look of the transfer print sensitive layer varies with the intensity of the ultraviolet rays.

2. The transfer printing structure capable of sensing and indicating intensity of ultraviolet rays as claimed in claim 1, wherein the color of the transfer print sensitive layer varies with the intensity of the ultraviolet rays.

3. The transfer printing structure capable of sensing and indicating intensity of ultraviolet rays as claimed in claim 1, wherein the shade of the color of the transfer print sensitive layer varies with the intensity of the ultraviolet rays.

4. The transfer printing structure capable of sensing and indicating intensity of ultraviolet rays as claimed in claim 1, 2 or 3, wherein the transfer print sensitive layer includes multiple display regions having different sensitivities to ultraviolet rays, whereby under different intensities of ultraviolet rays, different display regions change their looks.

5. The transfer printing structure capable of sensing and indicating intensity of ultraviolet rays as claimed in claim 4, wherein the display regions of the transfer print sensitive layer respectively present different colors.

6. The transfer printing structure capable of sensing and indicating intensity of ultraviolet rays as claimed in claim 4, wherein the display regions of the transfer print sensitive layer present the same color of different shades.

7. The transfer printing structure capable of sensing and indicating intensity of ultraviolet rays as claimed in claim 1, 2 or 3, wherein the transfer print sensitive layer further includes at least one decorative figure, the look of the decorative figure being not varied with the intensity of the ultraviolet rays.

8. The transfer printing structure capable of sensing and indicating intensity of ultraviolet rays as claimed in claim 4, wherein the transfer print sensitive layer further includes at least one decorative figure, the look of the decorative figure being not varied with the intensity of the ultraviolet rays.

9. The transfer printing structure capable of sensing and indicating intensity of ultraviolet rays as claimed in claim 5, wherein the transfer print sensitive layer further includes at least one decorative figure, the look of the decorative figure being not varied with the intensity of the ultraviolet rays.

10. The transfer printing structure capable of sensing and indicating intensity of ultraviolet rays as claimed in claim 6, wherein the transfer print sensitive layer further includes at least one decorative figure, the look of the decorative figure being not varied with the intensity of the ultraviolet rays.

11. The transfer printing structure capable of sensing and indicating intensity of ultraviolet rays as claimed in claim 1, 2 or 3, wherein an adhesive layer is applied to a face of the transfer print sensitive layer, which face is distal from the substrate.

12. The transfer printing structure capable of sensing and indicating intensity of ultraviolet rays as claimed in claim 4, wherein an adhesive layer is applied to a face of the transfer print sensitive layer, which face is distal from the substrate.

13. The transfer printing structure capable of sensing and indicating intensity of ultraviolet rays as claimed in claim 7, wherein an adhesive layer is applied to a face of the transfer print sensitive layer, which face is distal from the substrate.

14. The transfer printing structure capable of sensing and indicating intensity of ultraviolet rays as claimed in claim 8, wherein an adhesive layer is applied to a face of the transfer print sensitive layer, which face is distal from the substrate.
